# EUROPÄISCHE PATENTANMELDUNG

(11) **EP 2 243 860 A2**
(43) Veröffentlichungstag der Anmeldung: **27.10.2010**
(21) Anmeldenummer: 09162455.1
(22) Anmeldetag: 10.06.2009
(51) Int. Cl.: C23C 18/12, F24J 2/48

(54) **Verfahren zur Herstellung einer Solarabsorberbeschichtung**

(30) Priorität: 24.04.2009 DE 102009018554
(71) Anmelder: ZYRUS Beteiligungsgesellschaft mbH & Co. Patente I KG, 12529 Schönefeld / Waltersdorf (DE)
(72) Erfinder: Rostami, Bardia, Dr., D-22299 Hamburg (DE); Kruse, Jan, Dr.-Ing., D-22089 Hamburg (DE); Schwarz, Matthias-Klaus, Dr.-Ing., D-22926 Ahrensburg (DE); Uelzen, Thorsten, Dr.-Ing., D-21698 Bargstedt (DE)
(74) Vertreter: Zech, Stefan Markus

(57) **Zusammenfassung**

Die Erfindung betrifft ein Verfahren zur Herstellung einer Solarabsorberbeschichtung, gekennzeichnet durch die Schritte: Bereitstellen von vorzugsweise in einer Suspension vorliegenden Kohlenstoffpartikeln, Bereitstellen von mindestens einem Precursor für mindestens eine metalloxidische und/oder halbmetalloxidische Keramikkomponente, Herstellen eines Gemisches aus den vorzugsweise in einer Suspension vorliegenden Kohlenstoffpartikeln (14) und dem mindestens einem Precursor, Aufbringen des Gemisches auf eine zu beschichtende Oberfläche und Trocknen des Gemisches aus der Suspension und dem mindestens einen Precursor, so dass sich eine kohlenstoffhaltige Schicht (11) ausbildet.

## Beschreibung

Die Erfindung betrifft ein Verfahren zur Herstellung einer Solarabsorberbeschichtung.

Solarabsorberbeschichtungen werden in thermischen Solarkollektoren eingesetzt, wobei im Idealfall nahezu das gesamte Strahlungsspektrum des Sonnenlichts von der Oberfläche der Solarabsorberbeschichtung in thermische Energie umgewandelt wird. Die thermische Energie wird üblicherweise über in Kanälen strömende Wärmeträgermittel abgeführt.

Die Solarabsorberbeschichtung ist somit ein besonders wichtiger Bestandteil von thermischen Solarkollektoren. Eine hohe photothermale Umwandlungsausbeute für solche Kollektoren kann durch den Einsatz spektralselektiver Absorber erreicht werden. Dadurch wird versucht, dass die gewonnene Wärme nicht übermäßig im Infrarotspektrum wieder emittiert wird. Es wird also von der Beschichtung ein geringes Emissionsvermögen im Infrarotbereich oberhalb von etwa 2000 nm, welches mit einer hohen Reflektivität in diesem Spektralbereich einhergeht, gefordert.

Absorberbeschichtungen, die den genannten Anforderungen entsprechen, sind bereits kommerziell erhältlich. Die großflächige Herstellung ist in hoch optimierten Beschichtungsanlagen etwa mittels Physical Vapour Deposition (PVD) beispielsweise auf durchlaufenden Kupferbändern möglich, wobei sich beschichtete Flächen von etlichen m² pro Stunde erzielen lassen. Weiterhin sind Sputter-Verfahren und auch ein kombiniertes CVD-Sputter-Verfahren bekannt. Allerdings handelt es sich hierbei um Hochvakuum-Prozesse mit erheblichem apparativem Aufwand. Insgesamt besteht bei Herstellungsprozessen, die auf dem Prinzip der Kathodenzerstäubung basieren, ein erhöhter Kostenaufwand. Mit bekannten, kostengünstigeren Verfahren hergestellte Beschichtungen weisen hingegen relativ geringe bzw. unzweckmäßige Absorptionseigenschaften auf. Ferner nachteilig sind vergleichsweise hohe Emissionswerte derartiger Beschichtungen.

Robuste, festhaftende, thermisch und chemisch langzeitstabile Beschichtungen lassen sich auch durch Sol-Gel-Beschichtungsverfahren erzeugen. Die Vorteile solcher Verfahren liegen neben den geringen Anforderungen an Equipment und Prozesskontrolle in der hohen Variabilität der verwendbaren Materialien hinsichtlich Zusammensetzung und Schichtstruktur, in der Möglichkeit zur Beschichtung nahezu beliebiger nichtplanarer Flächen, in relativ geringem Energiebedarf und nicht zuletzt in der Kombinierbarkeit verschiedene Beschichtungsschritte zur Erzeugung von multifunktionellen Schichten, wie sie sich mit anderen bekannten Verfahren nicht oder mit kaum vertretbarem Aufwand realisieren lassen.

In diesem Zusammenhang ist aus der DE 10 2006 028 429 B3 ein Sol-Gel-Beschichtungsverfahren bekannt, wobei ein Substrat mit einer Titandioxid-Schicht unter Verwendung einer Precursor-Lösung, die mit einem Sol-Gel-Prozess auf das Substrat gebracht und anschließend damit behandelt wird, beschichtet wird. Der Precursor-Lösung werden vor der Beschichtung Silber-Ionen beigemischt.

Durch diesen Stand der Technik wurde das Absorptionsvermögen der Beschichtung für sichtbares Licht zwar erheblich gesteigert, bei gleichzeitiger geringer Emission im Infrarot-Bereich. Die Verwendung metallischer Schichtkomponenten führt allerdings zu relativ hohen Materialkosten. Auch der bei der Herstellung notwendige Aufwand für die Rückführung der metallischen Komponenten ist bei dem bekannten Verfahren erhöht.

Der Erfindung liegt die Aufgabe zugrunde, ein Verfahren zur Herstellung einer Solarabsorberbeschichtung vorzuschlagen, wobei eine vergleichsweise hohe Effektivität der Solarabsorberbeschichtung erreicht werden soll und insbesondere die Herstellungskosten gegenüber dem Stand der Technik reduziert sein sollen.

Diese Aufgabe wird insbesondere durch ein Verfahren zur Herstellung einer Solarabsorberbeschichtung nach Anspruch 1 gelöst.

Die Aufgabe wird insbesondere durch ein Verfahren zur Herstellung einer Solarabsorberbeschichtung gelöst, wobei das Verfahren die Schritte umfasst:
a) Bereitstellen von vorzugsweise in einer Suspension vorliegenden Kohlenstoffpartikeln;
b) Bereitstellen von mindestens einem Precursor für mindestens eine metalloxidische und/oder halbmetalloxidische Keramikkomponente;
c) Herstellen eines Gemisches aus den vorzugsweise in einer Suspension vorliegenden Kohlenstoffpartikeln und dem mindestens einem Precursor;
d) Aufbringen des Gemisches auf eine zu beschichtende Oberfläche; und
e) Trocknen des Gemisches aus der Suspension und dem mindestens einen Precursor, so dass sich eine kohlenstoffhaltige Schicht ausbildet.

Ein wesentlicher Punkt der Erfindung liegt darin, dass Kohlenstoffpartikel als absorbierende Spezies zum Einsatz kommen. Das Gemisch aus Kohlenstoffpartikeln und mindestens einem metalloxidischen/halbmetalloxidischen Precursor kann als Sol auf die zu beschichtende Oberfläche aufgetragen werden. Nach üblicher Sol-Gel-Prozessierung kann eine getrocknete Schicht vorliegen, in der Kohlenstoffpartikel vereinzelt oder perkoliert von einer Metalloxidmatrix/Halbmetalloxidmatrix umgeben sind. Dadurch können hohe Absorptionswerte für Sonnenlicht und zugleich geringe Emissionswerte im Infrarotspektrum erreicht werden. Zugleich sind die Solarabsorberbeschichtungen vergleichsweise kostengünstig in der Herstellung. Beispielsweise können Kohlenstoffpartikel in Form von Ruß eingesetzt werden, die für hohe Lichtabsorption bekannt sind und keiner besonderen Entsorgung bedürfen.

Der Begriff Kohlenstoffpartikel kann in der vorliegenden Anmeldung einschränkend verstanden werden in dem Sinne, dass die Partikel bis auf herstellungsbedingte, unvermeidliche Verunreinigungen ausschließlich aus Kohlenstoff bestehen. Im allgemeinen Fall soll jedoch unter Kohlenstoffpartikel ein Partikel verstanden werden, der Kohlenstoff nur zu einem gewissen Anteil, insbesondere vorbestimmten Anteil enthält. Beispielsweise kann der Anteil des Kohlenstoffs am Volumen oder der Masse des Partikels mindestens 10 %, insbesondere mindestens 30 %, vorzugsweise mindestens 50 %, weiter vorzugsweise mindestens 90 % betragen.

Vorzugsweise werden in Schritt a) Karbidpartikel bereitgestellt, so dass sich eine karbidhaltige Schicht ausbildet. Als Karbid innerhalb eines Partikels und/oder innerhalb mehrerer bereitgestellter Partikel kann beispielsweise TiC und/oder SiC und/oder WC und/oder BC und/oder CrC und/oder TaC und/oder HfC bereitgestellt werden. Karbidpartikel sind vergleichsweise kostengünstig in Herstellung und Entsorgung. Alternativ kann die in Schritt a) bereitgestellte Suspension auch karbidarm bzw. karbidfrei ausgebildet sein.

Die Kohlenstoffpartikel können zumindest teilweise als insbesondere graphitischen und/oder amorphen Kohlenstoff enthaltene Rußpartikel vorliegen. Weitere mögliche Modifikationen sind Diamant, Glaskohlenstoff (Glassy Carbon), Fullerene, Nanotubes, sowie Mischungen aus diesen sein. Als Lösemittel kommen wässrige oder auch nicht wässrige Lösungsmittel in Frage. Vorzugsweise werden die Kohlenstoffpartikel im Schritt a) in einer Suspension bereitgestellt, wobei es alternativ auch denkbar ist, die Kohlenstoffpartikel in Pulverform und/oder durch ein gasförmiges Trägermedium und/oder in noch anderer Form bereitzustellen.

Die Partikelgröße kann homogen sein, kann aber auch in üblicher Weise verteilt sein. Insofern weiter unten von einer Partikelgröße die Rede ist, kann diese Angabe das Maximum der Verteilung oder den arithmetischen/geometrischen Mittelwert oder den Median betreffen. Vorzugsweise liegen die Kohlenstoffpartikel als Nanopartikel vor.

Vorzugsweise wird die Solarabsorberbeschichtung auf ein metallisches Substrat aufgebracht, welches insbesondere Kupfer und/oder Aluminium und/oder Edelstahl enthält. Die zu trocknende Schicht kann einer Wärmebehandlung, beispielsweise bei Temperaturen von 300 °C bis 600 °C, insbesondere 400 °C bis 500 °C unterzogen werden. Eine Beimengung von Silber-Ionen gemäß DE 10 2006 028 429 B3 ist denkbar.

Beispielsweise wird im Schritt b) als Precursor Tetraethylorthosilicat (TEOS) und/oder ein Metallalkoholat, wie beispielsweise ein Aluminiumalkoholat und/oder ein Titanalkoholat bereitgestellt. Es ist zur Erzeugung von SiO₂ nicht zwingend erforderlich, dass TEOS zum Einsatz kommt, vielmehr sind auch weitere Si-Alkoholate oder weitere Halbmetallalkoholate, gegebenenfalls auch Sol-Gel-Precorsor möglich, welche nicht als Alkoholat vorliegen. Wenn TEOS zum Einsatz kommt, bildet sich nach einem Sol-Gel-Prozess eine SiO₂-Martix aus. Dadurch wird eine kostengünstige Verbindung von metalloxidischer/halbmetalloxidischer Matrix und den Kohlenstoffpartikeln erreicht. Vorzugsweise werden im Schritt b) mindestens zwei Precursoren bereitgestellt, wobei insbesondere die Precursoren derart ausgewählt werden und/oder die Prozessparameter derart ausgewählt werden, insbesondere die Precursoren in Schritt c) derart zugegeben werden, dass die Precursoren zeitlich versetzt zu einem Gel kondensieren. Der Vorgang des Kondensierens kann durch Effekte aus der Ligandenchemie, mit Hilfe von Stabilisatoren oder durch entsprechende Prozessparameter beeinflusst werden.

Es kann einer der Precursoren vor dem anderen hydrolisieren und zum Gel kondensieren und somit eine getrennte Phase ausbilden. Je nach Mischbarkeit des entstehenden Gels mit der noch nicht kondensierten zweiten Precursor-Lösung resultiert dies entweder in zwei ineinandergreifende Netzwerke oder in einer fein verteilten nanoskaligen Gelpartikelverteilung, die in dem Gelnetzwerk der später kondensierenden Phase eingebettet ist.

In einer alternativen Ausgestaltung werden im Schritt b) mindestens zwei Precursoren bereitgestellt, wobei insbesondere die Precursoren derart ausgewählt werden und/oder die Prozessparameter derart ausgewählt werden, insbesondere die Precursoren in Schritt c) derart zugegeben werden, dass die Precursoren gemeinsam zu einem Gel kondensieren. Bevorzugt werden die Prozessparameter so gewählt, dass die beiden metalloxidischen/halbmetalloxidischen Precursoren gemeinsam kondensieren und somit ein kohärentes Netzwerk mit homogener Verteilung der jeweiligen Metallatome ausbilden. Auch hier kann der Vorgang des Kondensierens durch Effekte aus der Ligadenchemie, mit Hilfe von Stabilisatoren oder durch entsprechende Prozessparameter beeinflusst werden.

In einer bevorzugten Ausführungsform werden in mindestens einem der Verfahrensschritte a) bis e) metalloxidische und/oder halbmetalloxidische Partikel, insbesondere Nanopartikel, eingebracht. Diese Nanopartikel können bereits vorgefertigt bzw. vorbereitet sein. Es können entsprechende Suspensionen von Nanopartikeln verwendet werden. Insgesamt wird es dadurch ermöglicht, dass eine getrennte zweite metalloxidische/halbmetalloxidische Phase ausgebildet werden kann.

Vorzugsweise wird die Oberfläche der metalloxidischen und/oder halbmetalloxidischen Partikel derart modifiziert, dass eine reaktive Oberfläche entsteht. Die Oberfläche der Nanopartikel kann so modifiziert werden, dass eine gute Anbindung an das Gelnetzwerk ermöglicht wird. Beispielsweise führt die Hydrolyse des entsprechenden Precursors in saurer oder basischer Umgebung dazu, dass die Oberfläche der Partikel in der Suspension angelöst bzw. eine Oberflächenschicht entfernt wird. Daraus kann die Entstehung reaktiver Oberflächen, die ggf. zur Bildung von Mischoxidphasen beitragen, resultieren. Liegt beispielsweise eine Suspension aus Al₂O₃-Partikeln vor, führt eine Ansäuerung einer TEOS-Lösung dazu, dass die Oberfläche der Al₂O₃-Partikel angelöst wird, wobei freie Bindungsvalenzen an den Al-Ionen geschaffen werden. Eine Reaktion mit Kieselsäure führt zu Aluminiumsilikaten.

Vorzugsweise wird die kohlenstoffhaltige Schicht derart ausgestaltet, dass sich ein Gradient des Kohlenstoffgehaltes und/oder der Partikelgröße parallel oder antiparallel zur Schichtnormalen ausbildet. Auch die Verteilung bzw. Partikelgröße der Bestandteile der metalloxidischen bzw. halbmetalloxidischen Matrix kann einen derartigen Gradienten bilden. Der Betrag des Gradienten muss nicht konstant über die Schichtdicke sein und kann auch Singularitäten aufweisen, also unstetige Sprünge aufweisen. Konkret können zwei oder mehrere benachbarte Schichten einen jeweils konstanten Kohlenstoffpartikelgehalt bzw. Karbidpartikel aufweisen. Insbesondere im Fall von mehr als einer nacheinander aufgetragener Schicht können unterschiedliche Suspensionen mit jeweils unterschiedlichen Partikelgrößen und/oder Partikelgrößenverteilungen verwendet werden, so dass beispielsweise nahe dem Substrat große, nahe der Oberfläche bzw. der Deckschicht kleine Partikel vorhanden sind. Die "großen" Partikel können beispielsweise zweimal, fünfmal oder auch zehnmal so groß sein wie die kleinen Partikel. Dies gilt allgemein auch für den Fall, dass der Gradient nicht durch die Nacheinanderauftragung von mehreren Schichten erzeugt wird.

Bevorzugtermaßen beträgt der Massenanteil oder Volumenanteil des Kohlenstoffs in der kohlenstoffhaltigen Schicht mindestens 10 %, insbesondere mindestens 20 %, vorzugsweise mindestens 50 % und weiter vorzugsweise mindestens 90 %. Maximalwerte für den Massenanteil oder Volumenanteil des Kohlenstoffs in der kohlenstoffhaltigen Schicht können höchstens 90 %, insbesondere höchstens 50 %, vorzugsweise höchstens 20 % und weiter vorzugsweise höchstens 10 % betragen. Wenn mehr als eine metalloxidische/halbmetalloxidische Komponente vorhanden ist, sind die Massenanteile im Prinzip frei wählbar.

Die Anteile der einzelnen Komponenten, insbesondere Precursoren und/oder Metalloxide bzw. Keramikkomponenten, können derart eingestellt werden, dass die Stöchiometrien von Mineralen nachgebildet werden. Im lediglich beispielhaft angeführten System Aluminiumoxid/Siliziumoxid wäre dies die Stöchiometrie eines Alumosilikats (1Al:1Si) oder eines Aluminosilikats (2Al:1Si). Alternativ kann eine Zusammensetzung gemäß den Bindungsvalenzen gewählt werden, beispielsweise Al-Si im atomaren Verhältnis 4:3, wodurch sich identische Bindungsmöglichkeiten beider Komponenten ergeben.

In einer konkreten Ausführungsform wird die kohlenstoffhaltige Schicht mit einer Antireflexionsschicht, insbesondere enthaltend SiO₂ und/oder ZnO zumindest teilweise abgedeckt. Dadurch kann der Wirkungsgrad der Solarabsorberbeschichtung weiter gesteigert werden.

Im Gegensatz zur Ausbildung eines Konzentrationsgradienten und/oder eines Partikelgrößengradienten können die Kohlenstoffpartikel auch gleichmäßig verteilt sein.

Die Kohlenstoffpartikel liegen vorzugsweise als Nanopartikel vor. Die Größe der Kohlenstoffpartikel kann mindestens 1 nm, insbesondere mindestens 3 nm, vorzugsweise mindestens 5 nm, weiter vorzugsweise mindestens 10 nm und/oder höchstens 100 nm, insbesondere höchstens 70 nm, vorzugsweise höchstens 50 nm, weiter vorzugsweise höchstens 20 nm, betragen.

Die auszubildende kohlenstoffhaltige Schicht kann eine Dicke von mindestens 50 nm, insbesondere mindestens 70 nm, vorzugsweise mindestens 100 nm und/oder von höchstens 200 nm, insbesondere höchstens 150 nm, vorzugsweise höchstens 100 nm, aufweisen.

Ferner wird eine Solarabsorberbeschichtung mit mindestens einer metalloxidischen oder halbmetalloxidischen Komponente offenbart, die insbesondere nach dem vorbeschriebenen Herstellungsverfahren hergestellt sein kann. Die Beschichtung umfasst mindestens eine metalloxidische und/oder halbmetalloxidische Komponente, die mit Kohlenstoffpartikeln versetzt ist, so dass zur Absorption von Licht zum Gewinnen von Wärme eine kohlenstoffhaltige Schicht ausgebildet ist. Die Vorteile einer derartigen Solarabsorberbeschichtung liegen in einer erheblichen Kostenreduktion bei der Herstellung derselben. Diesbezüglich wird auch auf die Ausführungen zum oben beschriebenen Verfahren verwiesen.

Die Solarabsorberbeschichtung kann mindestens zwei verschiedene metalloxidische und/oder halbmetalloxidische Komponenten umfassen. Vorzugsweise liegt mindestens eine metalloxidische und/oder halbmetalloxidische Komponente zumindest teilweise als Partikel, insbesondere Nanopartikel vor. Die kohlenstoffhaltige Schicht kann derart ausgebildet sein, dass ein Gradient des Kohlengehaltes und/oder der Partikelgröße parallel oder antiparallel zur Schichtnormalen ausgebildet ist.

Der Massenanteil oder Volumenanteil des Kohlenstoffs in der kohlenstoffhaltigen Schicht kann mindestens 10 %, insbesondere mindestens 20 %, insbesondere mindestens 50 %, insbesondere mindestens 90 % und/oder höchstens 90 %, insbesondere höchstens 50 %, insbesondere höchstens 20 %, insbesondere höchstens 10 %, betragen. Der Massen- bzw. Volumenanteil kann also einen Bereich umfassen, dessen Untergrenze gemäß der genannten Abstaffelung zwischen 10 % und 90 % betragen kann, wobei die Obergrenze ebenfalls durch einen beliebigen, vorzugsweise vom Wert der Untergrenze verschiedenen, Wert zwischen 10 % und 90 % bestimmt sein bzw. variieren kann.

Die Anteile der einzelnen Komponenten können derartig sein, dass die Stöchiometrie von Mineralen nachgebildet ist und/oder dass eine Zusammensetzung gemäß der Bindungsvalenzen vorliegt.

Die kohlenstoffhaltige Schicht kann mit einer Antireflexionsschicht, insbesondere enthaltend SiO₂ und/oder ZnO zumindest teilweise abgedeckt sein.

Die Größe der Kohlenstoffpartikel kann mindestens 1 nm, insbesondere mindestens 3 nm, vorzugsweise mindestens 5 nm, weiter vorzugsweise mindestens 10 nm und/oder höchstens 100 nm, insbesondere höchstens 70 nm, vorzugsweise höchstens 50 nm, weiter vorzugsweise höchstens 20 nm, betragen. Die kohlenstoffhaltige Schicht kann eine Dicke von mindestens 50 nm, insbesondere mindestens 70 nm, vorzugsweise mindestens 100 nm und/oder von höchstens 200 nm, insbesondere höchstens 150 nm, vorzugsweise höchstens 100 nm, aufweisen.

Des Weiteren wird die Verwendung einer Beschichtung offenbart, insbesondere nach einer Zusammensetzung der vorbeschriebenen Solarabsorberbeschichtung, vorzugsweise hergestellt nach dem vorbeschriebenen Verfahren zur Herstellung einer Solarabsorberbeschichtung, mit mindestens einer metalloxidischen und/oder halbmetalloxidischen Komponente, die mit Kohlenstoffpartikeln versetzt ist, zur Absorption von Licht zum Gewinnen von Wärme.

Wird TEOS als Precursor für den Sol-Gel-Prozess verwendet, kann dieses in Wasser zu Orthokieselsäure hydrolisieren, wobei diese ein Netzwerk ausbildet und somit ein Gel gebildet wird. Andere Precursoren zur Gelbildung sind zum Beispiel AluminiumAlkoholate, Titan-Alkoholate und dergleichen.

Ein Solarabsorber mit einem Substrat, insbesondere aus Metall, vorzugsweise zumindest teilweise aus Aluminium und/oder Kupfer und/oder Edelstahl und der Solarabsorberbeschichtung, wird unabhängig offenbart.

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: eine schematische Darstellung einer mit dem erfindungsgemäßen Verfahren hergestellten ersten Ausführungsform einer Solarabsorberbeschichtung auf einem Substrat;
- Fig. 2: eine schematische Darstellung einer zweiten Ausführungsform der Solarab- sorberbeschichtung auf einem Substrat;
- Fig. 3: ein Konzentrations-Schichtdicken-Diagramm;
- Fig. 4: eine schematische Darstellung einer dritten Ausführungsform der Solarab- sorberbeschichtung auf einem Substrat;
- Fig. 5: ein Partikel-Schichtdicken-Diagramm;
- Fig. 6: eine schematische Darstellung einer vierten Ausführungsform der Solarab- sorberbeschichtung auf einem Substrat; und
- Fig. 7: ein Konzentrations-Schichtdicken-Diagramm.

In der nachfolgenden Beschreibung werden für gleiche und gleichwirkende Teile dieselben Bezugsziffern verwendet.

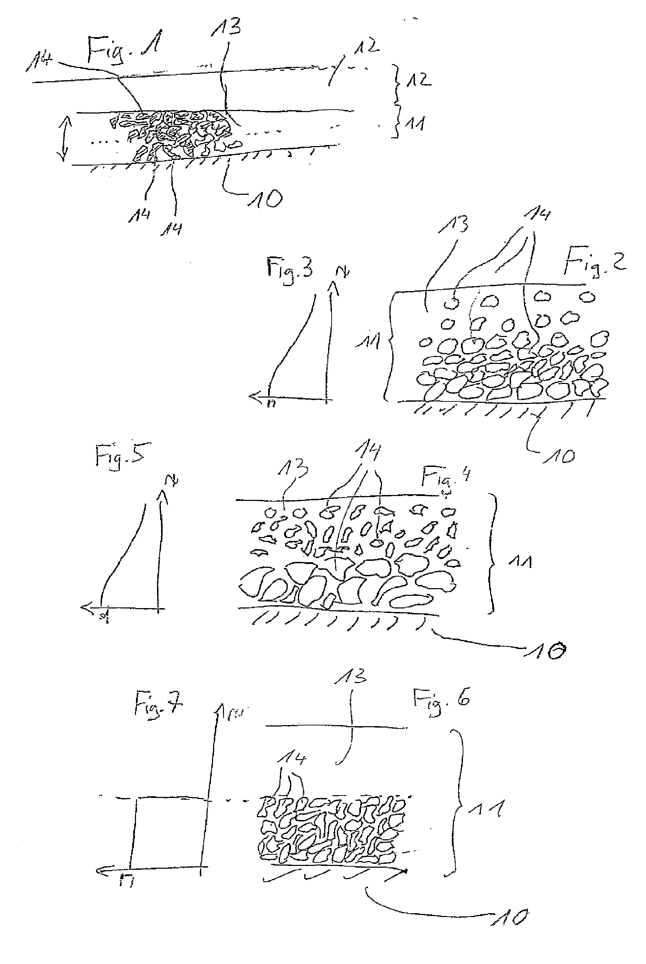

Fig. 1 zeigt eine erste Ausführungsform einer Solarabsorberbeschichtung auf einem Substrat 10 in einer schematischen Darstellung. Die Solarabsorberbeschichtung weist eine auf dem Substrat 10 angeordnete kohlenstoffhaltige Schicht 11 auf. Über der kohlenstoffhaltigen Schicht 11 wiederum ist als weiterer Bestandteil der Solarabsorberbeschichtung eine Antireflexionsschicht 12 angeordnet. Insgesamt ergibt somit die Einheit aus Substrat 10 und Solarabsorberbeschichtung einen dreischichtigen Aufbau.

Die kohlenstoffhaltige Schicht 11 umfasst eine metalloxidische bzw. halbmetalloxidische Keramikkomponente 13, die als Matrix für Kohlenstoffpartikel 14, die innerhalb der Keramikkomponente 13 eingebettet sind, dient. Zwischen dem Substrat 10 und der kohlenstoffhaltigen Schicht 11 kann ein Haftvermittler (nicht in den Figuren gezeigt) vorgesehen sein.

In der Ausführungsform gemäß Fig. 1 weisen die Kohlenstoffpartikel 14 eine etwa gleichförmige Größe auf. Im allgemeinen Fall kann die Größenverteilung der Kohlenstoffpartikel beliebig sein, beispielsweise mehrere Maxima aufweisen bzw. polydispers sein. Auch kann die Form der Kohlenstoffpartikel beliebig sein, insbesondere kugelförmig und/oder rotationselliptoidisch sein. Die Schichtdicke der kohlenstoffhaltigen Schicht 11 kann im Bereich zwischen 50 nm und 1 µm, insbesondere zwischen 100 nm und 500 nm, vorzugsweise zwischen 150 nm und 250 nm, liegen.

Das Substrat 10 kann aus Metall, insbesondere aus Aluminium und/oder Kupfer und/oder Edelstahl zumindest teilweise gefertigt sein.

Die Solarabsorberbeschichtung, insbesondere die Antireflexionsschicht 12 kann mit Silber-Ionen versetzt sein, was beispielsweise einem Pflanzenbewuchs bzw. allgemein organischen Verunreinigungen entgegenwirkt.

Fig. 2 zeigt eine zweite Ausführungsform einer Solarabsorberbeschichtung in einer schematischen Darstellung. Abweichend von der Ausführungsform gemäß Fig. 1, in der die Konzentration der Kohlenstoffpartikel 14 vergleichsweise homogen ist, weist die kohlenstoffhaltige Schicht 11 gemäß der Ausführungsform gemäß Fig. 2 ein Konzentrationsgefälle ausgehend von dem Substrat 10 auf.

In Fig. 3 ist ein entsprechendes Konzentrations-Schichtdicken-Diagramm dargestellt, wobei die Konzentration der Kohlenstoffpartikel durch ein "n" und die Schichtdicke durch ein "z" gekennzeichnet ist.

Fig. 4 zeigt eine dritte Ausführungsform einer Solarabsorberbeschichtung auf dem Substrat 10 in einer schematischen Darstellung. Bei dieser Ausführungsform nimmt die Partikelgröße der kohlenstoffhaltigen Schicht 11 ausgehend vom Substrat 10 mit zunehmender Entfernung vom Substrat 10 ab. Die Abnahme der Partikelgröße kann kontinuierlich sein, aber auch Sprünge aufweisen. Die Herstellung eines entsprechenden Gradienten kann beispielsweise durch Auftragen mehrerer, wie zum Beispiel zwei, drei, vier oder mehr Schichten erfolgen. Wie auch bei der Ausführungsform gemäß Fig. 2 kann eine Antireflexionsschicht, die allerdings nicht gezeigt ist, vorgesehen sein. Die Antireflexionsschicht könnte analog Fig. 1 angeordnet sein.

Nicht in den Figuren gezeigt, aber denkbar, wäre eine Ausführungsform, bei der sich die Form der Kohlenstoffpartikel ausgehend vom Substrat ändert. Beispielsweise können in einem substratnahen Bereich kugelförmige Kohlenstoffpartikel und in einem substratfernen Bereich elliptische Partikel vorgesehen sein oder umgekehrt.

Fig. 5 zeigt ein Partikelgrößen-Schichtdicken-Diagramm entsprechend der Ausführungsform gemäß Fig. 4. Die Partikelgröße ist mit "d" gekennzeichnet.

Fig. 6 zeigt die schematische Darstellung einer vierten Ausführungsform der Solarabsorberbeschichtung. Bei dieser Ausführungsform weist die Konzentration der Kohlenstoffpartikel 14 innerhalb der kohlenstoffhaltigen Schicht 11 einen Sprung auf. In einem substratnahen Bereich ist eine vergleichsweise hohe Konzentration in der Kohlenstoffpartikel 14 zu sehen, wobei in einem substratfernen Bereich keine Kohlenstoffpartikel 14 vorhanden sind.

In Fig. 7 ist das entsprechende Konzentrations-Schichtdicken-Diagramm zu sehen.

Die folgenden Ansätze 1 bis 5 werden als Herstellungsverfahren und/oder Erzeugnis unabhängig offenbart:

### Ansatz 1

Im ersten Ansatz kann Al₂O₃+SiO₂ als Matrix (Keramikkomponente) hergestellt werden. Im Allgemeinen liegt ein wesentlicher Aspekt darin, dass mindestens ein Sol-Gel-Precursor mit mindestens zwei Metallalkoholaten und vorzugsweise mindestens einem Metallsalz bereitgestellt wird. Die Herstellung aus einem Mischoxid-Gel ist bevorzugt.

### Ansatz 2

Ein wesentlicher Aspekt des zweiten Ansatzes besteht darin, dass eine SiO₂-Dispersion aus SiO₂-Partikeln, insbesondere Nanopartikeln bereitgestellt wird, die in einer Al₂O₃-Matrix und/oder einer TiO₂-Matrix, welche jeweils vorzugsweise aus Alkoholat hergestellt werden, verbracht wird. Vorzugsweise ist auch im Ansatz 2 Metallsalz vorgesehen.

### Ansatz 3

Ein wesentlicher Aspekt dieses Ansatzes besteht darin, dass als konkretes System TiO₂-SiO₂-Ag bereitgestellt wird. Alternativ zu SiO₂ kann gegebenenfalls Al₂O₃ zum Einsatz kommen. Im allgemeinen Fall, was eigenständig offenbart wird, werden zwei Oxide ausgewählt aus SiO₂, Al₂O₃, TiO₂, wobei gegebenenfalls eines der Oxide aus einer Dispersion eingebracht werden kann. Vorzugsweise kann TEOS beigemengt werden.

### Ansatz 4

Ein wesentlicher Aspekt des Ansatzes 4 ist eine Metalloxidmatrix umfassend zwei Schichten, von denen die untere, im Gebrauch von der Lichtquelle entferntere, Schicht ein Metall enthält, vorzugsweise bereitgestellt durch Metallsalz, wobei die obere, im Gebrauch der Lichtquelle näherliegende, Schicht ein weiteres Metalloxid enthält. Die Begriffe "untere" und "obere" sind nicht einschränkend zu verstehen und sollen lediglich die Anordnung der Schichten zueinander illustrieren und nicht deren Orientierung im Raum.

Vorzugsweise umfasst die untere Schicht eine Oxidkeramik, insbesondere mit Metall, beispielsweise mit einem Volumen- oder Massenanteil von 10 % bis 95 % oder 50 % bis 90 %, insbesondere 85 %. Beispielsweise kann als die untere Schicht TiO₂ und/oder Ag enthalten.

Weiterhin enthält eine zweite (auch ober genannt) Schicht mindestens eine Oxidkomponente, die vorzugsweise nicht in der unteren Schicht enthalten ist. Beispielsweise kommen als zweite (obere) Schicht SiO₂ und/oder TiO₂ zum Einsatz. Es kann eine weitere Mischoxidschicht aufgebracht werden bzw. sein.

Eine vorteilhafte Ausgestaltung ist beispielsweise TiO₂ mit einem Anteil von etwa 85% Silber als untere Schicht, darauf eine Mischoxidschicht, insbesondere TiO₂-SiO₂ als obere Schicht. Durch die entsprechende Einstellung der Stöchiometrien, kann aufgrund der Stöchiometrieabhängigkeit des Brechungsindexes in Form der Mischoxidschicht gegebenenfalls eine entsprechende Antireflexionsschicht ausgebildet sein. Alternativ kann als dritte Schicht eine separate Antireflexionsschicht aufgebracht werden/sein. Die Antireflexionsschicht (dritte Schicht) sollte unterschiedlich sein von der oberen, was die Anforderungen an eine Antireflexionsschicht besonders gut erfüllt.

### Ansatz 5

Der Ansatz 5 betrifft ein Verfahren zur Herstellung einer TiO₂-Schicht nach dem Sol-Gel-Verfahren mit den Schritten:
- Aufbringen eines TiO₂Ag-Sols mit einem Ag-Anteil von vorzugsweise 40 % bis 95 %, insbesondere 75 % bis 90 %, besonders bevorzugt 85 %, alternativ 75 % oder 90 %;
- Aufheizen auf vorzugsweise 180 °C bis 350 °C, insbesondere 220 °C bis 290 °C für 3 bis 15 Minuten, insbesondere für 5 bis 10 Minuten, beispielsweise für etwa 7 Minuten bei etwa 260 °C;
- Aufbringen einer TiO₂-Schicht;
   - Aufheizen auf vorzugsweise 300 °C bis 500 °C, insbesondere auf 330 °C bis 400 °C für vorzugsweise 5 bis 30 Minuten, insbesondere für 10 bis 20 Minuten, beispielsweise für etwa 15 Minuten bei etwa 350 °C;
   - Aufheizen auf vorzugsweise 400 °C bis 600 °C, insbesondere 470 °C bis 500 °C für vorzugsweise 3 bis 15 Minuten, insbesondere für 5 bis 10 Minuten, beispielsweise für etwa 7 Minuten bei etwa 500 °C;
   - vorzugsweise eine Aufbringung einer ZnO-Schicht, sowie weiter vorzugsweise eine Aufheizung auf vorzugsweise 300 °C bis 450 °C, insbesondere 340 °C bis 400 °C für vorzugsweise 5 bis 30 Minuten, insbesondere 10 bis 20 Minuten, beispielsweise für etwa 15 Minuten bei etwa 375 °C.

Im Allgemeinen werden die diskreten Werte für Heiztemperaturen und Behandlungszeiten innerhalb der oben angegebenen Bereiche vom Fachmann entsprechend der jeweiligen Anforderungen und Umgebungsbedingungen ausgewählt. Insbesondere die angegebenen Temperaturbereiche für das Erhitzen bzw. die Pyrolyse beschreiben also Wertebereiche, aus welchen diskrete Temperaturen auswählbar sind, die für die Dauer der angegebenen Behandlungszeiten aufrechterhalten werden.

Die Komponenten mit den Merkmalen nach einem der Ansätze 1 bis 5 bzw. die mit einem Verfahren gemäß einem der Ansätze 1 bis 5 hergestellten Komponenten, insbesondere Keramikkomponenten oder Precursoren bzw. Precursorlösungen, werden vorzugsweise mit dem erfindungsgemäßen Herstellungsverfahren für die Solarabsorberbeschichtung kombiniert bzw. bilden die im Schritt b) genannten Komponenten.

Das Aufbringen des Suspensions-Precursor-Gemischs gemäß Schritt d) erfolgt vorzugsweise durch Tauchbeschichtungs-, Spincoating- und/oder Meniskuscoatingprozesse. Beim Meniskuscoating bildet sich ein Meniskus zwischen dem Substrat und dem aus einer Schlitzdüse austretenden Suspension-Precursor-Gemisch aus. Es ist auch möglich, das Substrat durch einen Flüssigkeitsvorhang mit dem Suspensions-Precursor-Gemisch zu führen, um eine Beschichtung des Substrats zu erreichen. Vorzugsweise wird der Flüssigkeitsvorhang mit einem Luftvorhang kombiniert.

Im Hinblick auf den Schritt des Trocknens des Suspensions-Precursor-Gemisches (Schritt e)) ist es vorteilhaft, thermische Trocknungsprozesse einzusetzen, die unter Vermeidung dynamischer Effekte, wie Luftbewegungen, wirksam sind. Beispielsweise kann der Trocknungsprozess durch Heizplatten und/oder Öfen eingeleitet werden, wobei sich auf Induktion, Infrarot oder thermische Widerstandselemente basierende Heizeinrichtungen als zweckmäßig erwiesen haben. Besonders bevorzugt ist die Verwendung eines Infrarot-Durchlaufofens.

An dieser Stelle sei darauf hingewiesen, dass alle oben beschriebenen Teile für sich alleine gesehen und in jeder Kombination, insbesondere die in den Zeichnungen dargestellten Details, offenbart und beansprucht werden. Abänderungen hiervon sind dem Fachmann geläufig.

### Bezugszeichenliste:

- d: Partikelgröße
- n: Konzentration
- z: Schichtdicke

- 10: Substrat
- 11: kohlenstoffhaltige Schicht
- 12: Antireflexionsschicht
- 13: Keramikkomponente
- 14: Kohlenstoffpartikel

## Patentansprüche

1. Verfahren zur Herstellung einer Solarabsorberbeschichtung,
**gekennzeichnet durch** die Schritte:
a) Bereitstellen von vorzugsweise in einer Suspension vorliegenden Kohlenstoffpartikeln (14);
b) Bereitstellen von mindestens einem Precursor für mindestens eine metalloxidische und/oder halbmetalloxidische Keramikkomponente (13);
c) Herstellen eines Gemisches aus den vorzugsweise in einer Suspension vorliegenden Kohlenstoffpartikeln (14) und dem mindestens einem Precursor;
d) Aufbringen des Gemisches auf eine zu beschichtende Oberfläche; und
e) Trocknen des Gemisches aus der Suspension und dem mindestens einen Precursor, so dass sich eine kohlenstoffhaltige Schicht (11) ausbildet.

2. Verfahren nach Anspruch 1,
**dadurch gekennzeichnet, dass** in Schritt a) die Kohlenstoffpartikel (14) zumindest anteilig als Rußpartikel und/oder graphitischer Kohlenstoff und/oder anorpher Kohlenstoff und/oder Diamant und/oder Glaskohlenstoff und/oder Fullerene und/oder Nanotubes bereitgestellt werden.

3. Verfahren nach einem der vorhergehenden Ansprüche,
**dadurch gekennzeichnet, dass**
in Schritt b) Tetraethylorthosilikat (TEOS) und/oder ein Metallalkoholat, wie beispielsweise ein Aluminium-Alkoholat und/oder Titan-Alkoholat bereitgestellt wird.

4. Verfahren nach einem der vorhergehenden Ansprüche,
**dadurch gekennzeichnet, dass**
mindestens zwei Precursoren im Schritt b) bereitgestellt werden, wobei insbesondere die Precursoren derart ausgewählt werden und/oder die Prozessparameter derart ausgewählt werden, insbesondere die Precursoren in Schritt c) derart zugegeben werden, dass die Precursoren zeitlich versetzt zu einem Gel kondensieren.

5. Verfahren nach einem der Ansprüche 1 bis 3,
**dadurch gekennzeichnet, dass**
mindestens zwei Precursoren im Schritt b) bereitgestellt werden, wobei insbesondere die Precursoren derart ausgewählt werden und/oder die Prozessparameter derart ausgewählt werden, insbesondere die Precursoren im Schritt c) derart zugegeben werden, dass die Precursoren gemeinsam zu einem Gel kondensieren.

6. Verfahren nach einem der vorhergehenden Ansprüche,
**dadurch gekennzeichnet, dass**
in mindestens einem der Verfahrensschritte a) bis e) metalloxidische und/oder halbmetalloxidische Partikel, insbesondere Nanopartikel eingebracht werden.

7. Verfahren nach Anspruch 6,
**dadurch gekennzeichnet, dass**
die Oberfläche der metalloxidischen und/oder halbmetalloxidischen Partikel derart modifiziert wird, dass eine reaktive Oberfläche entsteht.

8. Verfahren nach einem der vorhergehenden Ansprüche,
**dadurch gekennzeichnet, dass**
die kohlenstoffhaltige Schicht (11) ausgestaltet wird derart, dass sich ein Gradient des Kohlenstoffgehaltes und/oder der Partikelgröße parallel oder antiparallel zur Schichtnormalen ausbildet.

9. Verfahren nach einem der vorhergehenden Ansprüche,
**dadurch gekennzeichnet, dass**
der Massenanteil oder Volumenanteil des Kohlenstoffs in der kohlenstoffhaltigen Schicht (11) mindestens 10 %, insbesondere mindestens 20 %, vorzugsweise mindestens 50 %, weiter vorzugsweise mindestens 90 %, beträgt.

10. Verfahren nach einem der vorhergehenden Ansprüche,
**dadurch gekennzeichnet, dass**
der Massenanteil oder Volumenanteil des Kohlenstoffs in der kohlenstoffhaltigen Schicht (11) höchstens 90 %, insbesondere höchstens 50 %, vorzugsweise höchstens 20 %, weiter vorzugsweise höchstens 10 %, beträgt.

11. Verfahren nach einem der vorhergehenden Ansprüche,
**dadurch gekennzeichnet, dass**
die Anteile der einzelnen Komponenten derart eingestellt werden, dass die Stöchiometrien von Mineralen nachgebildet werden.

12. Verfahren nach einem der vorhergehenden Ansprüche,
**dadurch gekennzeichnet, dass**
die Anteile der einzelnen Komponenten derart eingestellt werden, dass eine Zusammensetzung gemäß der Bindungsvalenzen gewählt wird.

13. Verfahren nach einem der vorhergehenden Ansprüche,
**dadurch gekennzeichnet, dass**
die kohlenstoffhaltige Schicht (11) mit einer Antireflexionsschicht (12), insbesondere enthaltend SiO₂ und/oder ZnO, zumindest teilweise abgedeckt wird.

14. Verfahren nach einem der vorhergehenden Ansprüche,
**dadurch gekennzeichnet, dass**
die Größe der Kohlenstoffpartikel (14) mindestens 1 nm, insbesondere mindestens 3 nm, vorzugsweise mindestens 5 nm, weiter vorzugsweise mindestens 10 nm, und/oder höchstens 100 nm, insbesondere höchstens 70 nm, vorzugsweise höchstens 50 nm, weiter vorzugsweise höchstens 20 nm, beträgt.

15. Verfahren nach einem der vorhergehenden Ansprüche,
**dadurch gekennzeichnet, dass**
die auszubildende kohlenstoffhaltige Schicht (11) eine Dicke von mindestens 50 nm, insbesondere mindestens 70 nm, vorzugsweise mindestens 100 nm, und/oder von höchstens 1 µm, beispielsweise höchstens 200 nm, insbesondere höchstens 150 nm, vorzugsweise höchstens 100 nm, aufweist.
